# EUROPEAN PATENT APPLICATION

(11) **EP 2 076 007 A2**
(43) Date of publication of application: **01.07.2009**
(21) Application number: 08254099.8
(22) Date of filing: 22.12.2008
(51) Int. Cl.: H04N 1/00, G06F 3/033

(54) **Touch control electronic display**

(30) Priority: 21.12.2007 US 963404
(71) Applicant: Sourcing Network Sales LLC, Lafayette, California 94549 (US)
(72) Inventor: Finnegan, Dean, Dublin, California 94568 (US)
(74) Representative: Tothill, John Paul

(57) **Abstract**

A digital media apparatus (100) includes display provided in a display housing. The apparatus include an electronic image display having an image display region (210). A mat material (220) surrounds the display region, the mat material having a first side and a second side. A transparent cover material overlies the display region and the mat material, the cover material positioned on the first side of the mat material. A touch sensor array (250) is in contact with the mat material on the second side of the mat material.

## Description

### BACKGROUND

With the increasing popularity of digital photography, digital picture frames have become a popular means of displaying digital photos. Typically, a digital picture frame includes a display such as a liquid crystal display (LCD) having a display screen encased in a plastic or wooden frame made to resemble a printed picture frame. The surrounding frame is attached to the outside of the display, and is positioned at the front of the display so as to resemble a conventional picture frame housing displaying a printed picture.

Frames include a variety of additional features, including the ability to play music or other media files. Controls are provided to control the presentation of media within the frame.

### SUMMARY

A digital media apparatus, which in one embodiment is a digital picture frame, is disclosed. The frame allows a user to attach two different types of frame elements, each lending a different appearance to the digital media apparatus.

In one embodiment, the apparatus includes a display provided in a display housing, the housing having a front portion and a rear portion, and including a mounting region defined at an edge of the housing. A first frame element may be mounted to the display housing by passing the rear portion of the housing through an opening in the first frame element to allow the element to engage the mounting region. A second frame element may be mounted to the display housing by passing a front portion of the display housing into a cavity in the frame element and securing the element to the housing by a fastener.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

Figures 1A and 1B are a front perspective view and rear perspective view, respectively, of a picture frame apparatus in accordance with the present technology.

Figs. 2A through 2D are front views of an electronic display apparatus showing areas where touch screen controls can be utilized.

Fig. 3 is a prospective, exploded view of the sensor placement relative to the screen in a display apparatus in accordance with the present technology.

Fig 4 is a side view of the display apparatus.

Figs. 5A and 5B illustrate individual sensor placement and the use of icon controls in the display apparatus of the present technology.

Figs. 6A and 6B illustrate the use of the touch screen controls of the display apparatus to provide a page-flipping effect when thumbnail photos are displayed in the electronic display apparatus.

### DETAILED DESCRIPTION

A touch control frame electronic media display apparatus is disclosed herein.

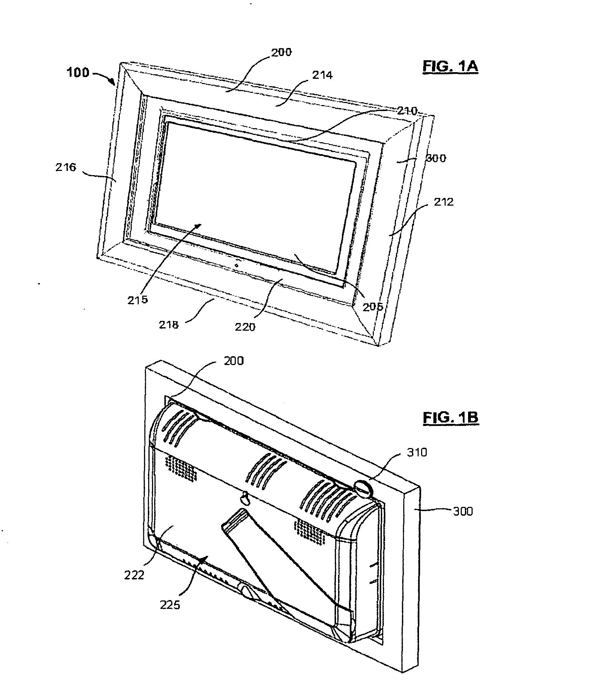

Figures 1A and 1B show an embodiment of the frame apparatus 100 which includes a display 200 surrounded by a frame element 300. In this embodiment, the frame element has a traditional wood appearance, but the frame element may take any shape or style and may be separate from the display 200, omitted entirely, or integrated therewith. The display 200 includes a display housing 222 having a front portion 205 including face 215 and rear portion 225. The front portion is shown in Figure 1A and the rear portion 225 is shown in Figure 1B.

The housing 222 includes a face 215 having a top edge 214, bottom edge 218 and side edges 212 and 216. The edges of face 215 may form a lip which is used to secure frame element 300 onto housing 200.

A frame element 300 is secured to the housing 222 by the use of fasteners such as threaded screws 310. Frame element 300 may be made from any number of suitable materials, including plastic or wood, and may be configured to resemble an ornamental picture frame. The frame element may take any suitable configuration and may be secured to the housing by any of a number of suitable means. In this embodiment, the face 215 may have a mat element 220 surrounding the display area 210 of the face 215 which displays an image.

Apparatus 100 includes a display housing 222 which has a screen portion defining face 215 for displaying electronic photos or movies, as well as other information. Display 200 comprises, for example, a liquid crystal display (LCD), a passive display, an active display or any other known display. The display 200 is also generally referred to as a flat panel display. It will be understood that the display 200 may be available in a plurality of sizes and shapes. For example, the display may include an oval shape, a square shape, a rectangular shape, etc. External frame 300 includes a decorative finish, style and color and may be comprised of a molded plastic or a carved wood finish. Other materials may also be employed. Different colors and styles for frame 300 are also contemplated. A mat 220 may be placed around the exterior of display face 215 and may be changed with different colors or styles. The mat provides a decorative border at the edge of the display area. A power source (not shown) in the form of a battery or external power supply is provided for display apparatus 100.

The display 200 may also include circuitry and controls, described below, to display and perform various types of media including images and movies on the face, and sounds via built in speakers (not shown). Circuitry is provided in the housing to render display media on the face of the device. Such circuitry may include one or more microprocessors, logic circuits and memory as well as instructions directing the microprocessor to implement various media display functions. Such instructions may include providing a series of user menus and prompts providing the user with access to control a number of functions that the device can perform. For example, one set of instructions may provide a slide-show interface allowing the user to select a series of pictures for sequential or random display, each for a period of time on the display. Any of a number of prompts and/or menus can be utilized to provide such control functionality. In one embodiment, internal non-volatile memory may be included to allow a user to store media within the display device. In addition, plug-in non-volatile memory interfaces may be included to allow the user to utilize well know formats of non-volatile memory such as Compact Flash or Secure Digital card memory to interface with the control circuitry. Controls interfacing with the circuitry allow the user to control the presentation of various media in the display screen. In this way, photos or images downloaded from a digital camera, the Internet, computer or other device can be stored on a given format, for example TIFF, PDF, JPG, etc. and displayed on display face 215.

In one embodiment, a user interface is displayed in the display area 210 on the face 215 that provides a user various options for displaying media, including determining the source of the media, the order of the media display, and whether music accompanies the display, for example.

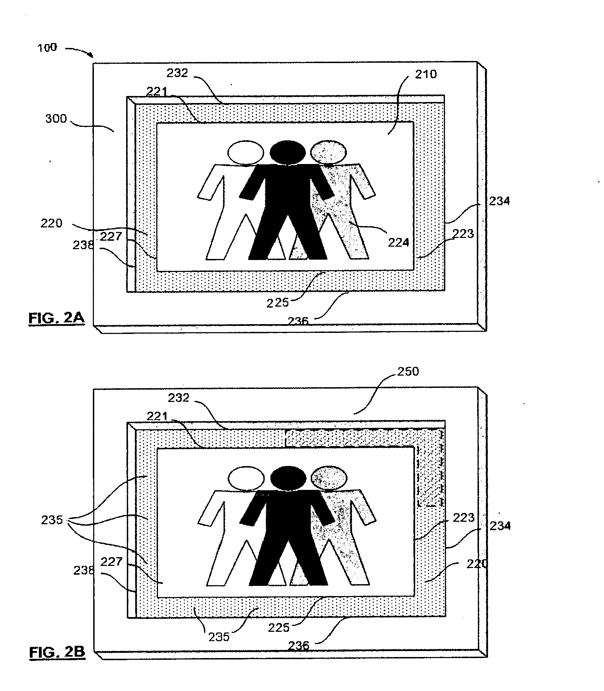

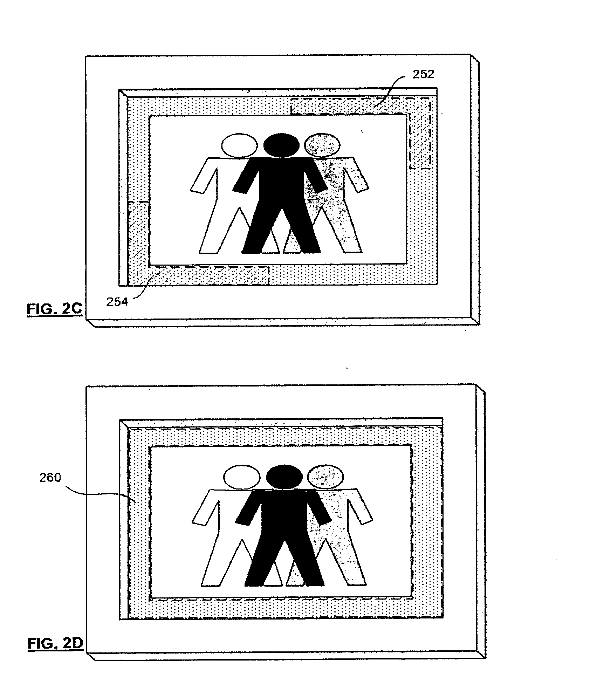

Figs. 2A through 2D illustrate a front view of the electronic display apparatus 100 and the control apparatus of the present technology. As illustrated in Figs. 2A through 2D, a mat 220 having a mat area 235 surrounding the display area 210 is generally used to surround a picture 224 to offset the picture 224 with respect to the frame 300 to provide a visually pleasant experience. The image 224 in the picture display area 210 may comprise any electronically generated still or moving image. The matt area 235 is bounded by a top edge 221, bottom edge 225 and side edges 227 and 223 of the picture area of the display 200, and a top inner edge 232, bottom inner edge 236 and side inner edges 234 and 238 of the frame 250. As illustrated in Figs. 2B, 2C and 2D, a touch sensitive control area 250 is provided within the mat area 235, but not the display area 210 of the display apparatus 100. In accordance with the technology, the control area 250 does not enter the picture display area 210, but rather is limited to the mat area 235. As illustrated below, the sensors for the touch sensitive control are advantageously provided below the mat 220, enabling different styles of mats to be used interchangeably with the apparatus 100, based on user style preferences.

Fig. 2B illustrates a first example placement of the control area 250 in the upper right hand corner of the display apparatus when viewed showing Figs. 2A through 2D. Fig. 2C illustrates a second example of the placement of a control area 252, 254, in both the upper right hand corner and lower left hand corner of the mat area. Fig. 2D illustrates another example of a control area 260 completely surrounding the image display area 210. It will be understood that the sensor control areas can take on any configuration of shape or area surrounding the picture display area 210.

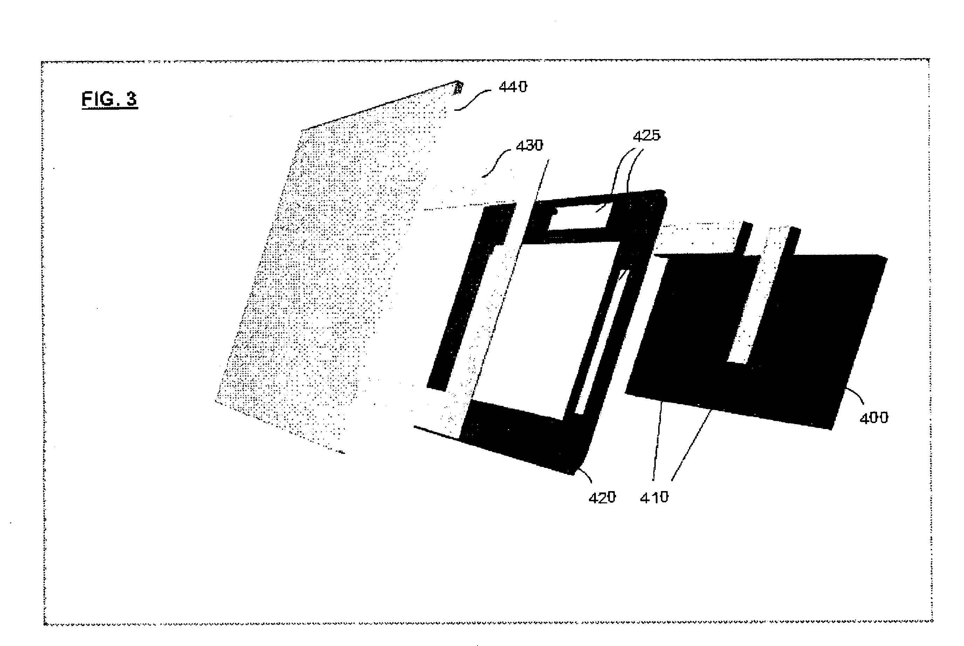

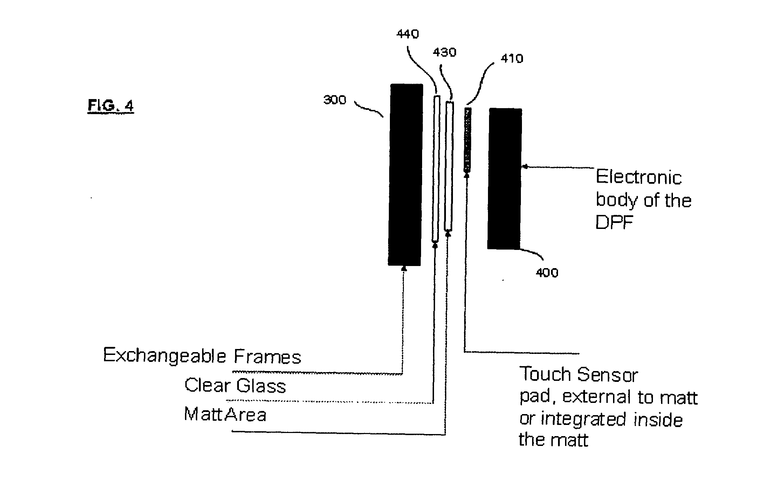

Figs. 3 and 4 illustrate the relative layers of materials and positioning of the sensors utilized in the display apparatus. In Fig. 3, the frame element 300, is omitted. As shown in Figs. 3 and 4, a display 200 has attached thereto one or more sensor arrays 410. The sensor arrays can be integrated into the display housing 200, or attached to the display housing by any number of suitable means. The sensor arrays are connected electronically to components within the display housing 200 to enable actions read by the arrays to be interpreted by the components. Where the sensor arrays are not integrated into the housing 200 thus enabling direct electrical connection, electrical connection may be made by, for example, contact pads or other suitable electrical connections.

Each array abuts a portion of mat material 430. In one embodiment, a front housing 420 includes windows 425 to enable the sensor arrays to abut the mat material 430. The mat material 430 is itself is pressed against glass 440. The mat material 430 may be any suitable material such as paper, cardboard, or plastic, or even a matt made of photography material. The sensor arrays 410 may be alternatively be integrated in the front housing to abut the mat material 430. Alternatively, the sensor arrays 410 may be integrated directly into the mat material 430.

In contrast to known systems where the sensors are provided adjacent to the glass, in the present technology, the sensors operate through the mat material and between the edge of the LCD display and the frame. As such, the two major factors affecting the sensitivity of the touch through the glass and paper are the operating frequency of the sensor and the touch pad size. Experiments have shown that the suitable diameter for the sensors 502 is between 25 and 35 mm. Sensors 502 are known in the industry as "capacitive touch sensors," and are available for many vendors.

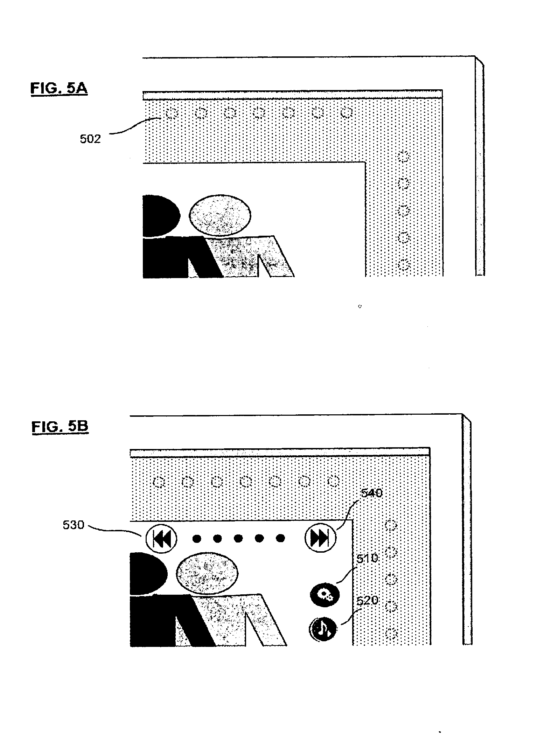

Figs. 5A and 5B illustrate two exemplary placements of touch pad sensors 502.

As noted above, Figs. 5A and 5B illustrate the placement of sensors 502 in the mat area 220. In the illustrations of Figs. 5A and 5B, it should be recognized that the sensors are separated from the glass material by the mat material 430. Although only one row of sensors is illustrated, multiple rows may be used. The size and position of the sensors is arranged in any of a number of suitable patterns within the array.

As discussed above, the display components within the housing may provide a user with a series of menus and controls accessible via the sensors to implement the functions that the display device can perform. Such controls can be sensitive to the movement of a user's finger over the sensors to respond to the control prompt provided by the display.

Once example of such prompts is illustrated in Fig. 5B. Fig. 5B illustrates the use of icons 510, 520, 530 and 540 which prompt the user to move a finger in one of two directions over the sensors. Initially, the icons may appear only when a user's figure contacts one of the sensors, the icons may appear on the screen. Otherwise, the icons are not displayed when an image 220 is displayed in the display area 210. Icon 510 may represent, for example, an image of two meshing gears and is generally understood to represent a "settings" access button. When a user presses the touch screen area adjacent to the icon, the interface may be enabled and displayed in the image display area or may generate a new set of buttons. Likewise, a volume icon 520 may indicate access to a volume level control when a sensor adjacent to the icon is touched.

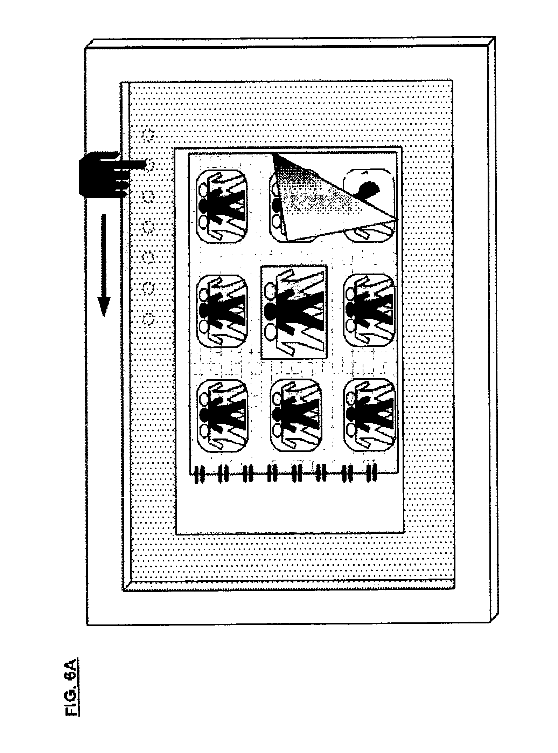

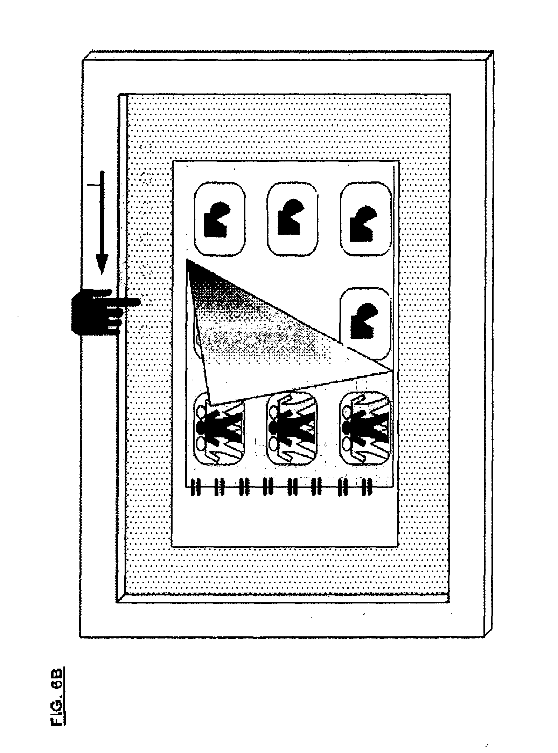

Icons 530 and 540 illustrate to the user the motions necessary to allow a user to page through various sequenced photos, or to page through various "pages" of smaller images as illustrated in Figs. 6A and 6B. As a user wipes his hand from right to left as shown in the sequential Figs. 6A and 6B, a page-flipping effect between first page of thumbnail images and second page thumbnail images can be provided. As will be recognized, any number of control interface paradigms may be utilized.

It will be recognized that the placement of the sensors and the particular motions utilized to enable effects, controls and other elements of the display apparatus can be varied from those illustrated in the figures. For example, the page effect can be enabled by using an up and down motion on a vertically positioned set of touch screen controls, through circular or other motions, or through other gestures. Numerous types of alternative control gestures, icons, and paradigms may be utilized with the present technology. For example, a picture exploration feature need not take the paradigm of a flipping book as described above but may be presented as a list of files, file icons or thumbnails, with appropriate graphic controls present adjacent to the touch sensor arrays. As will be readily understood, this may vary in accordance with the position of the arrays and the extent to which the sensors occupy the mat area.

By placing the sensor elements below the mat area and within the mat area of the display apparatus, the unsightliness of the control sensors to a user's image display is avoided. Moreover, any fingerprints which results from the use of the controls area limited to the mat area and do not impact the display of the image. Because the mat area can generally be darker than the image display area, these fingerprints can be less apparent to viewers of the image. This is in sharp contrast to devices such as Apple Computer, Inc.'s I-Phone which includes a touch sensor interface over the entire surface of the display.

Use of the control area in only the mat area of the display apparatus thereby provides the advantage that the image display is unimpeded by user control functions and the apparatus may not be cleaned after every use of the interface.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A digital media apparatus, comprising:
an electronic image display having an image display region and being provided in a display housing, the housing having a front portion and a rear portion,
a mat material surrounding the display region, the mat material having a first side and a second side;
a transparent cover material overlying the display region and the mat material, the cover material positioned on the first side of the mat material; and
a touch sensor array in contact with the mat material on the second side of the mat material.

2. The apparatus of claim 1 wherein the mat material defines a mat region surrounding the image display region, and the touch sensor array is positioned only within the mat region.

3. The apparatus of claim 1 wherein the sensor array is not in contact with the transparent cover.

4. The apparatus of claim 3 wherein the transparent material is one of glass or plastic and the mat material is one of plastic or cardboard.

5. The apparatus of claim 1 wherein the sensor array is formed into the mat material.

6. The apparatus of claim 1 wherein the sensor array is comprised of at least one capacitive touch sensor.

7. The apparatus of claim 9 wherein the capacitive touch sensor has a diameter of 25 mm - 35 mm.

8. A display apparatus comprising:
an electronic image display having an image display region and being provided in a display housing, the housing having a front portion and a rear portion;
a mat material surrounding the display region, the mat material defining a mat region surrounding the display region;
a glass material covering the image display area and the mat material; and
at least one touch sensor array positioned only in the mat region.

9. The apparatus of claim 8 wherein the mat material has a first side and a second side, the glass material is positioned on the first side of the mat material and the sensor array is positioned on the second side of the mat material.

10. The apparatus of claim 8 wherein the mat material has a first side and a second side, the glass material is positioned on the first side of the mat material and the sensor array is integrated into the mat material and not in contact with the transparent cover.

11. The apparatus of claim 8 wherein the sensor array is comprised of a plurality of capacitive touch sensors positioned in the mat region.

12. The apparatus of claim 8 wherein the touch sensor array in contact with the mat material on the second side of the mat material.
